# EUROPÄISCHE PATENTSCHRIFT

(11) **EP 1 240 964 B1**
(45) Veröffentlichungstag und Bekanntmachung des Hinweises auf die Patenterteilung: **09.01.2008**
(21) Anmeldenummer: 02405151.8
(22) Anmeldetag: 01.03.2002
(51) Int. Cl.: B23B 49/00

(54) **Handwerkzeuggerät mit elektronischem Tiefenanschlag**
Handtool with electronic stop
Outil à main avec arrêt électronique

(30) Priorität: 15.03.2001 DE 10112364
(43) Veröffentlichungstag der Anmeldung: 18.09.2002
(73) Patentinhaber: HILTI Aktiengesellschaft, 9494 Schaan (LI)
(72) Erfinder: Würsch, Christoph, 9470 Werdenberg (CH); Schaer, Roland, 9472 Grabs (CH)
(74) Vertreter: Wildi, Roland

(56) Entgegenhaltungen:
- EP-A- 0 591 096
- DE-A- 3 615 874
- US-A- 5 161 922

## Beschreibung

Die Erfindung bezeichnet ein zumindest teilweise drehendes und schlagendes Handwerkzeuggerät wie einen Bohrhammer mit einem elektronischen Tiefenanschlag.

Zur Erzeugung von Sacklöchern vorgegebener Tiefe eignet sich ein Tiefenanschlag, welcher nach Erreichung der Solltiefe an der Werkzeugspitze den weiteren Materialabtrag unterbindet. Insbesondere zum Setzen hochbelasteter Anker in Gestein wie Beton und Mauerwerk im Bauhauptgewerbe ist die Einhaltung einer bestimmten Sacklochtiefe wichtig, da beim Setzen von Hinterschnittankern die Sacklochtiefe auf den Anker abgestimmt ist.

Nach der DE3214182 ist ein stabförmiger Tiefenanschlag für Bohrhämmer bekannt, welcher durch den mechanischen Kontakt des Tiefenanschlags mit dem Werkstück unter Beibehaltung des Drehantriebs ein weiteres Eindringen des Werkzeugs verhindert. Über die Leerschlagunterdrückung erfolgt durch den mechanischen Kontakt mittelbar eine Abschaltung des Schlages. Nach der DE3912991 unterbricht ein federnd vorgespannter, einstellbarer, stabförmiger Tiefenanschlag bei Erreichen des Sollwertes den Strompfad zum Antrieb einer Bohrmaschine. Derartige sperrige mechanische Tiefenanschläge sind oftmals für den Nutzer störend und daher im Bauhauptgewerbe unerwünscht.

Nach der DE2838968 ist ein berührungsloser elektronischer Tiefenanschlag messtechnisch mit US-, HF- oder Lichtsensorik bestückt, welche zur Berechnung der Tiefe den Abstand zwischen der Werkzeugoberfläche und dem im Handwerkzeuggerät angeordneten Sensor bestimmt. Ein Berechnungsmittel unterbricht nach Erreichen der Solltiefe den Strompfad des Antriebs. Des Abschalten des Antriebs führt bei dem stark reibhaftenden, abrasiv abgetragenen Bohrmehl bei üblichen Baustoffen zu einem Verhaken des Bohrwerkzeugs im Sackloch.

Nach der DE2855217 schaltet eine Schlagbohrmaschine nach Erreichen der Solltiefe die Drehrichtung des Bohrwerkzeugs um, um ein Verhaken zu vermeiden. Durch den damit verbundenen, bei höheren Leistungsklassen bezüglich der Bedienungssicherheit bedenklichen, Ruck am Handgriff wird der Nutzer vom Erreichen der Solltiefe informiert. Die Schlagwirkung und somit der Abbau des abrasiven Materials über die Solltiefe hinaus bleiben beibehalten.

Die Aufgabe der Erfindung besteht in der Realisierung eines verhakungsfrei bohrtiefenbegrenzenden berührungslosen Tiefenanschlags für Gestein.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein Handwerkzeuggerät mit einem Elektroantrieb und einem Schlagwerk für ein zumindest teilweise drehend und schlagend angetriebenes Bohrwerkzeug einen elektronischen Tiefenanschlag mit einem Sensor zur berührungslosen Entfernungsmessung und eine, über ein Steuermittel steuernd mit dem Elektroantrieb und/oder dem Schlagwerk verbundene, Recheneinheit zur Signalisierung eines einen Sollwert erreichenden Messwertes auf, wobei durch die Signalisierung mittels des Steuermittels unter Beibehaltung eines Drehantriebs gleicher Drehrichtung die Schlagwirkung reduzierbar ist.

Beim Abbauprozess von Gestein trägt hauptsächlich die Schlagwirkung zum abrasiven Abbau des Materials bei, wohingegen die Drehbewegung lediglich der Versetzung und dem Materialtransport dient. Somit wird durch die nichtlinear ansteigende Kennlinie der Abbauleistung über der Schlagwirkung bei einer hinreichenden Verminderung der Schlagleistung praktisch kein weiterer Abbau des Materials erfolgen. Die Beibehaltung einer Drehbewegung gleicher Drehrichtung verhindert sowohl ein Verhaken des Bohrwerkzeugs als auch unzulässig hohe Auslenkungen am Handgriff.

In einer ersten vorteilhaften Variante bei Handwerkzeuggeräten mit drehzahlgekoppeltem, pneumatischem Schlagwerk ist, aufgrund der nichtlinear ansteigenden Kennlinie der Schlagleistung pneumatischer Schlagwerke über der Drehzahl, eine Reduktion der Drehzahl des Elektroantriebs über das Steuermittel hinreichend, welches weiter vorteilhaft als ein im Strompfad des Elektroantriebs angeordneter Stromregler wie eine Phasenanschnittsteuerung ausgeführt ist, welches standardmässig in Handwerkzeuggeräten vorhanden und somit lediglich bezüglich der Ansteuerung durch die Recheneinheit des Tiefenanschlags ergänzt werden muss.

In einer zweiten vorteilhaften Variante bei Handwerkzeuggeräten mit pneumatischem Schlagwerk ist das Steuermittel als ein elektrisch steuerbares pneumatisches Ventilmittel zwischen der Gasfeder und der Umgebung ausgebildet, welches den zur Übertragung des Schlages notwendigen Gasdruck entlüftet und somit die Schlagwirkung hinreichend reduziert oder vollständig unterbindet.

In einer dritten vorteilhaften Variante bei Handwerkzeuggeräten mit einem Schlagwerk ist das Steuermittel als ein elektrisch steuerbares Kupplungsmittel zwischen dem Elektroantrieb und dem Schlagwerk ausgebildet, welches den Kraftfluss zum Schlagantrieb unterbricht.

Obige Varianten sind zudem miteinander kombinierbar, wodurch sich die Steuerung flexibel ausführen lässt.

Die Erfindung wird bezüglich eines vorteilhaften Ausführungsbeispiels näher erläutert mit einer Figur als Handwerkzeuggerät mit elektronischem Tiefenanschlag.

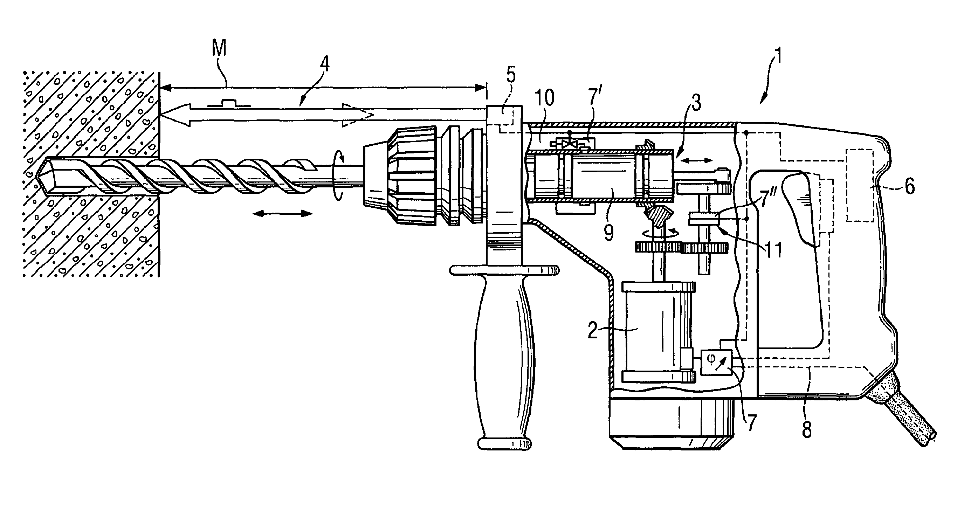

Nach der Figur weist ein Handwerkzeuggerät 1 mit einem Elektroantrieb 2 und einem pneumatischen Schlagwerk 3 einen laserimpulsbasierten berührungslosen elektronischen Tiefenanschlag 4 auf, welcher einen Sensor 5 und eine Recheneinheit 6 zur Signalisierung eines einen Sollwert erreichenden Messwertes M aufweist. Ein Steuermittel 7, 7', 7" ist mit der Recheneinheit 6 steuerbar verbunden. Das Steuermittel 7 ist als ein im Strompfad 8 des Elektroantriebs 2 zur Stromquelle angeordneter phasenanschnittsgesteuerter Stromregler ausgebildet, der zusätzlich steuerbar mit einem druckbetätigten Motorschalter im Handgriff des Handwerkzeuggerätes 1 verbunden ist. Das Steuermittel 7' ist als ein elektrisch steuerbares pneumatisches Ventilmittel zwischen einer Gasfeder 9 des pneumatischen Schlagwerks 3 und einer Umgebung 10 ausgebildet. Das Steuermittel 7" ist als ein elektrisch steuerbares Kupplungsmittel 11 zwischen dem Elektroantrieb 2 und dem Schlagwerk 3 ausgebildet.

## Patentansprüche

1. Handwerkzeuggerät für ein zumindest teilweise drehend und schlagend angetriebenes Bohrwerkzeug mit einem Elektroantrieb (2) und einem Schlagwerk (3) sowie mit einem elektronischen Tiefenanschlag (4) mit einem Sensor (5) zur berührungslosen Entfernungsmessung und einer, über ein Steuermittel (7, 7', 7") steuernd mit dem Elektroantrieb (2) und/oder dem Schlagwerk (3) verbundener, Recheneinheit (6) zur Signalisierung eines einen Sollwert erreichenden Messwertes (M), **dadurch gekennzeichnet, dass** durch die Signalisierung mittels des Steuermittels (7, 7', 7") die Schlagwirkung unter Beibehaltung eines Drehantriebs reduzierbar ist.

2. Handwerkzeuggerät nach Anspruch 1, **dadurch gekennzeichnet, dass** ein mit dem Elektroantrieb (2) drehzahlgekoppeltes, pneumatisches Schlagwerk (3) vorhanden ist sowie über das Steuermittel (7) die Drehzahl des Elektroantriebs (2) reduzierbar ist.

3. Handwerkzeuggerät nach Anspruch 2, **dadurch gekennzeichnet, dass** das Steuermittel (7') ein im Strompfad (8) des Elektroantriebs (2) angeordneter Stromregler ist.

4. Handwerkzeuggerät nach Anspruch 1, **dadurch gekennzeichnet, dass** ein pneumatisches Schlagwerk (3) vorhanden ist, dessen Gasfeder (9) über das als ein elektrisch steuerbares pneumatisches Ventilmittel ausgebildete Steuermittel (7') zu einer Umgebung (10) belüftbar ist.

5. Handwerkzeuggerät nach Anspruch 1, **dadurch gekennzeichnet, dass** das Steuermittel (7") als ein elektrisch steuerbares Kupplungsmittel zwischen dem Elektroantrieb (2) und dem Schlagwerk (3) ausgebildet ist.

## Claims

1. A hand-held tool for a drilling tool which is driven so that at least sometimes it has a rotary and hammer action, said hand-held tool comprising an electric drive (2) and a hammer mechanism (3), as well as an electronic depth stop (4) with a sensor (5) for non-contact measurement of distance, and a computing unit (6) connected via control means (7, 7', 7") to the electric drive (2) and/or hammer mechanism (3) for signalling when a measured value (M) reaches a desired value, **characterized in that,** as a result of said signalling, the hammer action can be reduced by the control means ((7, 7', 7") whilst a rotary drive is maintained.

2. A hand-held tool according to Claim 1, **characterized in that** it has a pneumatic hammer mechanism (3) coupled in terms of speed with the electric drive (2), and moreover the speed of the electric drive (2) can be reduced via the control means (7).

3. A hand-held tool according to Claim 2, **characterized in that** the control means (7') is a current regulator disposed in the current path (8) of the electric drive (2).

4. A hand-held tool according to Claim 1, **characterized in that** it has a pneumatic hammer mechanism (3), of which the gas spring (9) can be vented to a surrounding area (10) via control means (7') taking the form of electrically controlled pneumatic valve means.

5. A hand-held tool according to Claim 1, **characterized in that** the control means (7") takes the form of electrically controlled clutch means between the electric drive (2) and the hammer mechanism (3).

## Revendications

1. Appareil portatif pour un foret entraîné au moins partiellement en rotation et en percussion, comprenant un moyen d'entraînement électrique (2) et un mécanisme de percussion (3) ainsi qu'une butée électronique de profondeur (4) avec un capteur (5) pour une mesure d'éloignement sans contact et un module de calcul (6) connecté avec une fonction de commande au moyen d'entraînement électrique (2) et/ou au mécanisme de percussion (3) par l'intermédiaire d'un moyen de commande (7, 7', 7") afin de signaler une valeur mesurée (M) atteignant une valeur de consigne, **caractérisé en ce que** la signalisation permet, à l'aide du moyen de commande (7, 7', 7"), de réduire l'effet de percussion tout en conservant un entraînement en rotation.

2. Appareil portatif selon la revendication 1, **caractérisé en ce qu'**il est prévu un mécanisme de percussion pneumatique (3) couplé sur le plan de la vitesse de rotation au moyen d'entraînement électrique (2), et la vitesse de rotation du moyen d'entraînement électrique (2) peut être réduite par l'intermédiaire du moyen de commande (7).

3. Appareil portatif selon la revendication 2, **caractérisé en ce que** le moyen de commande (7') est un régulateur d'intensité de courant implanté sur le trajet de courant (8) du moyen d'entraînement électrique (2).

4. Appareil portatif selon la revendication 1, **caractérisé en ce qu'**il est prévu un mécanisme de percussion pneumatique (3) dont le ressort à gaz (9) peut être dégazé dans l'environnement (10) par l'intermédiaire d'un moyen de commande (7') conformé en moyen de valve pneumatique à commande électrique.

5. Appareil portatif selon la revendication 1, **caractérisé en ce que** le moyen de commande (7") est conformé en moyen d'accouplement à commande électrique implanté entre le moyen d'entraînement électrique (2) et le mécanisme de percussion (3).
